# EUROPEAN PATENT SPECIFICATION

(11) **EP 3 748 364 B1**
(45) Date of publication and mention of the grant of the patent: **24.05.2023**
(21) Application number: 19178494.1
(22) Date of filing: 05.06.2019
(51) Int. Cl.: G01N 35/00, B25J 13/08, B25J 15/08, G01B 7/12, B25J 15/00

(54) **GRIPPING DEVICE FOR HANDLING SAMPLE CONTAINERS AND ANALYTICAL INSTRUMENT**
GREIFVORRICHTUNG ZUM HANDHABEN VON PROBENBEHÄLTERN UND ANALYSEINSTRUMENT
DISPOSITIF DE PRÉHENSION POUR MANIPULER DES RÉCIPIENTS D'ÉCHANTILLONS ET INSTRUMENT D'ANALYSE

(43) Date of publication of application: 09.12.2020
(73) Proprietor: Roche Diagnostics GmbH, 68305 Mannheim (DE); F. Hoffmann-La Roche AG, 4070 Basel (CH)
(72) Inventor: Rein, Michael, 70736 Fellbach (DE)
(74) Representative: Patentanwälte Ruff, Wilhelm, Beier, Dauster & Partner mbB

(56) References cited:
- EP-A1- 3 444 616
- US-A1- 2006 248 960
- US-A1- 2007 134 131
- US-A1- 2009 285 664
- US-A1- 2011 089 709
- US-A1- 2014 036 276
- US-B1- 6 203 760

## Description

The invention relates to a gripping device for handling sample containers and to an analytical instrument.

US 2014/0036276 A1 discloses a system for gripping a specimen container. The system comprises a plurality of gripper fingers, a processor, and a sensing potentiometer communicatively coupled to the processor. The sensing potentiometer is configured to produce an output based on a distance between two gripper fingers when a specimen container is gripped. The processor is configured to determine a dimension of the specimen container based on the output.

EP 3 444 616 A1 discloses a method for determining, whether an opening of a laboratory sample container is open or closed. The method comprises the steps: determining a surface profile of the laboratory sample container in the region of the opening and determining, whether the opening of the laboratory sample container is open or closed, in dependence of the determined surface profile.

US 2009/0285664 A1 discloses a robot, a robot hand and a method of controlling the robot hand comprising a palm, and a plurality of fingers being connected to the palm, wherein the robot hand is controlled using a distance sensor installed on the palm.

US 2006/0248960 A1 discloses a gage and gripper assembly for directly measuring characteristics of a workpiece.

It is the object of the invention to provide a gripping device for handling sample containers and to provide an analytical instrument being highly flexible and performant.

The gripping device is adapted to handle sample containers, e.g. in form of conventional sample tubes. The sample containers are closed by caps of a given cap type or are not closed by caps. The cap type may be chosen from a set of different cap types. Different types of sample containers may e.g. be closed by different types of caps.

The gripping device comprises a number of fingers being adapted to collectively grip a sample container and/or adapted to cause gripping of a sample container.

The gripping device further comprises a tactile sensor device being arranged at and/or mechanically coupled to at least one of the fingers. The tactile sensor device is adapted to measure and/or sample a longitudinal profile of the sample container and of the cap, if any, being gripped. The longitudinal profile is a profile in a longitudinal extension of the sample container.

The gripping device further comprises a control device coupled to the tactile sensor device, wherein the control device is adapted to determine if the sample container is closed by a cap or not closed by a cap based on the sampled longitudinal profile. The sampled longitudinal profile depends if the sample container is closed by a cap or not. Typically, the part of the cap not being inserted into the sample container has another diameter, in particular a larger diameter, than the sample container. Consequently, the sampled longitudinal profile changes specifically at the transition position between the sample container and the cap. Thus, the control device may e.g. evaluate the gradient of the sampled longitudinal profile to determine if a cap is present. Additionally or alternatively, the control device may compare the sampled longitudinal profile to stored longitudinal profiles of known sample containers with/without caps.

The tactile sensor device comprises a number, e.g. between 2 and 100, of tactile sensors being movable and being arranged longitudinally along at least one of the fingers to sample the longitudinal profile. The tactile sensors may be axially movable. The tactile sensors may be movable in a direction perpendicular to a longitudinal axis of the sample container being gripped.

According to an embodiment, if the control device determines that the sample container is closed by a cap, the control device is further adapted to determine the cap type, in particular based on the sampled longitudinal profile. Typically, the sampled longitudinal profile is characteristic for the cap type. Thus, it is possible to determine the cap type based on the sampled longitudinal profile. The control device may e.g. compare the sampled longitudinal profile to stored longitudinal profiles of known cap types. The control device may further use a sensed cap color to determine the cap type.

According to an embodiment, the cap comprises a base portion to be inserted into the sample container, wherein if the control device determines that the sample container is closed by a cap the control device is further adapted to determine an extent to which the base portion is inserted into the sample container based on the sampled longitudinal profile. Typically, the cap comprises a base portion to be inserted into the sample container and an adjacent head portion having a larger diameter then the sample container. If the base portion is fully inserted into the sample container, the sampled profile changes between a value being determined by the diameter of the sample container and a value being determined by the head portion at the transition position between the sample container and the head portion. If the base portion is not fully inserted into the sample container, the sampled profile changes between a value being determined by the diameter of the sample container, then a value being determined by the diameter of the base portion and then a value being determined by the head portion. Consequently, the length of the base portion not being inserted into the sample container may be determined. Further, if the cap type is known, the geometrical properties of the cap are known, e.g. the longitudinal extension of the base portion and of the head portion. Thus, the extent to which the base portion is inserted into the sample container can be computed based on the sampled longitudinal profile.

According to an embodiment, each of the number of tactile sensors comprises a pin being axially movable, and a displacement measurement cell being adapted to measure an axial displacement of the axially movable pin. The longitudinal profile is formed by the axial displacements of the tactile sensors.

According to an embodiment, the tactile sensors are spring loaded, such that the axially movable pin is pressed against a surface of the sample container being gripped by means of the spring force.

According to an embodiment, the number of tactile sensors is arranged longitudinally along each one of the number of fingers. If e.g. the gripping device comprises two fingers, a number of tactile sensors is arranged longitudinally along the first finger and the same number of tactile sensors is arranged longitudinally along the second finger.

According to an embodiment, the number of fingers is two.

According to an embodiment, the gripping device further comprises a color sensor being adapted to sense a color of a cap, if any, being gripped. The control device may be adapted to determine the cap type depending on the color of a cap.

The analytical instrument comprises a gripping device as described above. The analytical instrument typically comprises further components interacting with the gripping device, e.g. a device for processing samples contained in the sample container, centrifuges, a device for aliquoting, etc.

The invention will now be described in detail with respect to the drawings. In the figures,
- Fig. 1: depicts a side view of an analytical instrument comprising a gripping device for handling sample containers according to a first embodiment,
- Fig. 2: depicts a side view of the gripping device of fig. 1 in an opened state,
- Fig. 3: depicts a side view of the gripping device of fig. 1 in a closed state, and
- Fig. 4: depicts a side view of a gripping device for handling sample containers according to a further embodiment.

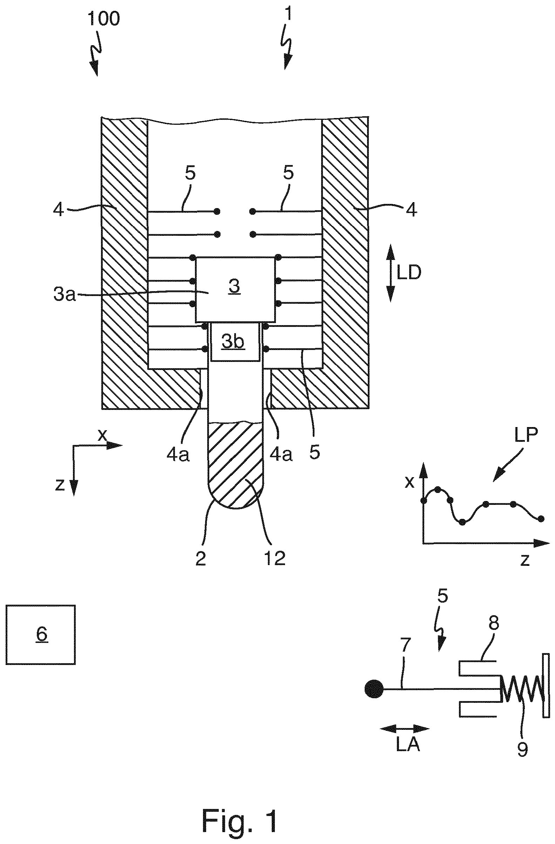

Fig. 1 highly schematically depicts an analytical instrument 100 comprising a gripping device 1 for handling sample containers 2, wherein the sample containers 2 are closed by caps 3 of a given cap type or are not closed by caps.

The sample containers 2 contain a laboratory sample 12 to be processed and/or analyzed, e.g. a blood sample.

The analytical instrument may e.g. form a device for aliquoting.

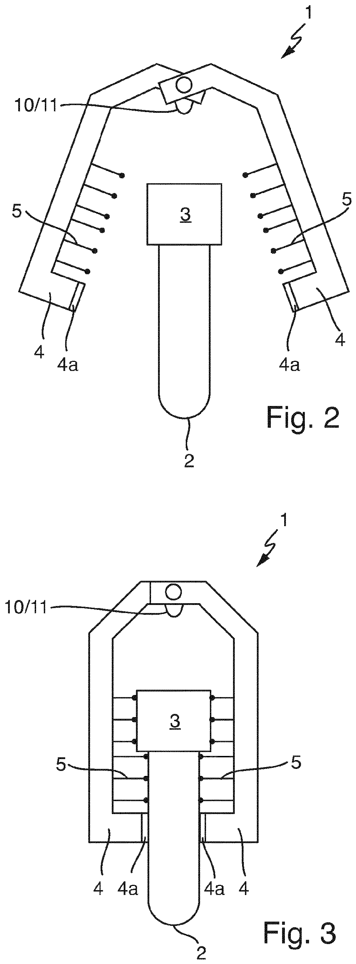

The gripping device 1 comprises two L-shaped fingers 4 being adapted to collectively grip a sample container 2 by means of corresponding gripping surfaces 4a, as depicted. The fingers 4 may be opened to release the sample container 2, see fig. 2, or may be closed to grip the sample container 2, see fig. 3

The fingers 4 may be transferred/moved/rotated by means of a conventional drive mechanism not explicitly depicted, e.g. in form of an electric motor.

The gripping device 1 further comprises a tactile sensor device comprising a number of tactile sensors 5 being arranged longitudinally, i.e. in a longitudinal direction LD, along the fingers 4 to sample a longitudinal profile LP of the sample container 2 and of the cap 3, if any, being gripped.

Each tactile sensor 5 comprises a pin 7 being movable along its longitudinal axis LA. The pins 7 are arranged such that the longitudinal axis of each pin is rectangular to a longitudinal axis of a sample container 2 being gripped.

Each tactile sensor 5 further comprises a displacement measurement cell 8 being adapted to measure an axial displacement of the corresponding axially movable pin 7.

Each tactile sensor 5 further comprises a spring 9, such that the axially movable pin 7 is pushed against an outer surface of the sample container 2 being gripped.

The longitudinal profile LP may e.g. denote an axial displacement (a displacement in x direction, i.e. in the direction of the longitudinal axis LA) of the axially movable pin 7 depending on a longitudinal position z.

The gripping device 1 further comprises a control device 6 coupled to the displacement measurement cells 8 of each tactile sensor 5, such that the control device 6 can read the longitudinal profile LP. Based on the longitudinal profile LP the control device 6 determines if the sample container 2 is closed by a cap 3 or not closed by a cap. Further, the control device 6 determines the cap type based on the sampled longitudinal profile LP.

Referring to figures 2 and 3, the gripping device 1 further comprises a color sensor 10 being coupled to the control device 6 and being adapted to sense a color of a cap 3, if any, being gripped. The control device may determine a cap type and/or sample container type based on the color of the cap 3.

Referring to figures 2 and 3, the gripping device 1 further comprises an optional distance sensor 11 being coupled to the control device 6 and being adapted to sense a distance to a cap 3, if any, being gripped. The control device may control the gripping operation based on the sensed distance.

Referring to fig. 1, the cap 3 comprises a head portion 3a and a base portion 3b to be inserted into the sample container 2. If the control device 6 determines that the sample container 2 is closed by a cap 3 the control device 6 determines an extent to which the base portion 3b is inserted into the sample container 2 based on the sampled longitudinal profile LP.

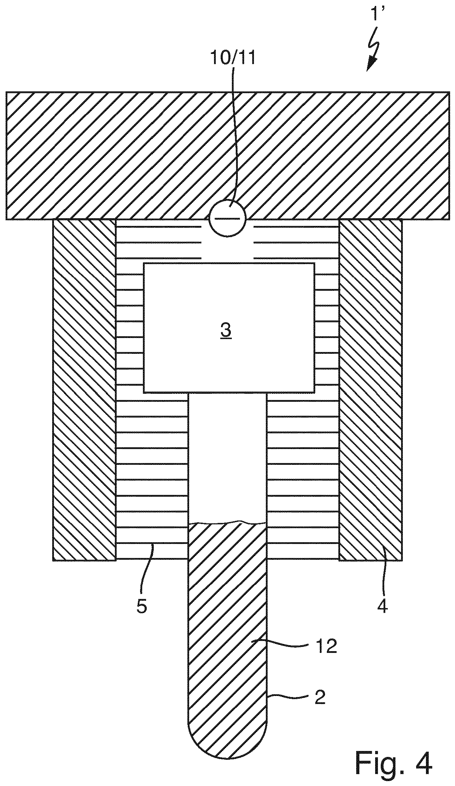

Fig. 4 depicts a gripping device 1' for handling sample containers 2 according to a further embodiment.

The gripping device 1' comprises two I-shaped fingers 4 and grips the sample container 2 by means of the spring loaded tactile sensors 5, wherein the gripping device 1 depicted in fig.1 grips the sample container 2 by means of the gripping surfaces 4a of the fingers 4.

Regarding the remaining features, reference is made to the description with regard to the embodiment depicted in figures 1 to 3.

The gripping device 1/1' according to the invention is able to determine cap presence, cap type, the extent of the cap inserted into the sample container, sample container diameter and cap color while handling the sample container.

The gripping device 1/1' comprises a tactile/mechanical sensor on fingers 4 including axially movable pins 7, wherein each axially movable pin 7 is independently responsive to the surface of the sample container 2 handled/gripped by the gripping device 1/1'.

Displacement measurement cells 8 map the axial position of each pin 7 to generate a longitudinal profile LP of the cap 3 and of the sample container 2.

This profile information LP is used to classify the type of cap 3 and the extent the cap 3 is inserted within the sample container 2.

If the insertion of the cap 3 is unstable, the axially movable pins 7 hold/fix the cap 3 in place during transport/handling.

An additional color sensor 10 may also be integrated within gripping device 1 for cap color determination.

## Claims

1. Gripping device (1, 1') for handling sample containers (2), wherein the sample containers (2) are closed by caps (3) of a given cap type or are not closed by caps,
wherein the gripping device (1, 1') comprises:
- a number of fingers (4) being adapted to collectively cause gripping of a sample container (2),
**characterized in that** the griping device (1, 1') further comprises:
- a tactile sensor device (5, 7, 8, 9) being arranged at at least one of the fingers (4) and being adapted to sample a longitudinal profile (LP) of the sample container (2) and of the cap (3), if any, being gripped, wherein the tactile sensor device (5, 7, 8, 9) comprises a number of tactile sensors (5) being arranged longitudinally along at least one of the fingers (4) to sample the longitudinal profile (LP), and
- a control device (6) coupled to the tactile sensor device (5, 7, 8, 9), wherein the control device (6) is adapted to determine if the sample container (2) is closed by a cap (3) or not closed by a cap based on the sampled longitudinal profile (LP).

2. Gripping device (1, 1') according to claim 1, **characterized in that**
- if the control device (6) determines that the sample container (2) is closed by a cap (3) the control device (6) is further adapted to determine the cap type, in particular based on the sampled longitudinal profile (LP).

3. Gripping device (1, 1') according to anyone of the preceding claims, **characterized in that**
- the cap (3) comprises a base portion (3b) to be inserted into the sample container (2),
- wherein if the control device (6) determines that the sample container (2) is closed by a cap (3) the control device (6) is further adapted to determine an extent to which the base portion (3b) is inserted into the sample container (2) based on the sampled longitudinal profile (LP).

4. Gripping device (1, 1') according to anyone of the preceding claims, **characterized in that**
- each tactile sensor (5) comprises
- an axially movable pin (7), and
- a displacement measurement cell (8) being adapted to measure an axial displacement of the axially movable pin (7).

5. Gripping device (1, 1') according to anyone of the preceding claims, **characterized in that**
- the tactile sensors are spring loaded.

6. Gripping device (1, 1') according to anyone of the preceding claims, **characterized in that**
- the number of tactile sensors (5) is arranged longitudinally along each one of the number of fingers (4).

7. Gripping device (1, 1') according to one of the preceding claims, **characterized in that**
- the number of fingers (4) is two.

8. Gripping device (1, 1') according to one of the preceding claims, **characterized in that**
- the gripping device (1, 1') further comprises:
- a color sensor (10) being adapted to sense a color of a cap (3), if any, being gripped.

9. Analytical instrument (100), comprising
- a gripping device (1, 1') according to one of the preceding claims.

## Patentansprüche

1. Greifvorrichtung (1, 1') zum Handhaben von Probenbehältern (2), wobei die Probenbehälter (2) mit Kappen (3) eines vorgegebenen Kappentyps verschlossen sind oder nicht mit Kappen verschlossen sind,
wobei die Greifvorrichtung (1, 1') Folgendes umfasst:
- mehrere Finger (4), die dafür ausgelegt sind, gemeinsam das Greifen eines Probenbehälters (2) zu bewirken,
**dadurch gekennzeichnet, dass** die Greifvorrichtung (1, 1') ferner Folgendes umfasst:
- eine Berührungssensorvorrichtung (5, 7, 8, 9), die an mindestens einem der Finger (4) angeordnet und dafür ausgelegt ist, ein Längsprofil (LP) des Probenbehälters (2) und der Kappe (3), sofern vorhanden, die gegriffen werden, abzutasten, wobei die Berührungssensorvorrichtung (5, 7, 8, 9) mehrere Berührungssensoren (5) umfasst, die längs entlang mindestens eines der Finger (4) angeordnet sind, um das Längsprofil (LP) abzutasten, und
- eine Steuerungsvorrichtung (6), die an die Berührungssensorvorrichtung (5, 7, 8, 9) gekoppelt ist, wobei die Steuerungsvorrichtung (6) dafür ausgelegt ist, basierend auf dem abgetasteten Längsprofil (LP) zu bestimmen, ob der Probenbehälter (2) mit einer Kappe (3) verschlossen ist oder nicht mit einer Kappe verschlossen ist.

2. Greifvorrichtung (1, 1') nach Anspruch 1, **dadurch gekennzeichnet, dass**
- wenn die Steuerungsvorrichtung (6) bestimmt, dass der Probenbehälter (2) mit einer Kappe (3) verschlossen ist, die Steuerungsvorrichtung (6) ferner dafür ausgelegt ist, insbesondere basierend auf dem abgetasteten Längsprofil (LP) den Kappentyp zu bestimmen.

3. Greifvorrichtung (1, 1') nach einem der vorstehenden Ansprüche, **dadurch gekennzeichnet, dass**
- die Kappe (3) einen Basisabschnitt (3b) umfasst, der in den Probenbehälter (2) einzuführen ist,
- wobei, wenn die Steuerungsvorrichtung (6) bestimmt, dass der Probenbehälter (2) mit einer Kappe (3) verschlossen ist, die Steuerungsvorrichtung (6) ferner dafür ausgelegt ist, basierend auf dem abgetasteten Längsprofil (LP) einen Grad zu bestimmen, zu dem der Basisabschnitt (3b) in den Probenbehälter (2) eingeführt wird.

4. Greifvorrichtung (1, 1') nach einem der vorstehenden Ansprüche, **dadurch gekennzeichnet, dass**
- jeder Berührungssensor (5) Folgendes umfasst
- einen axial beweglichen Stift (7) und
- eine Verschiebungsmesszelle (8), die dafür ausgelegt ist, eine axiale Verschiebung des axial beweglichen Stiftes (7) zu messen.

5. Greifvorrichtung (1, 1') nach einem der vorstehenden Ansprüche, **dadurch gekennzeichnet, dass**
- die Berührungssensoren federbelastet sind.

6. Greifvorrichtung (1, 1') nach einem der vorstehenden Ansprüche, **dadurch gekennzeichnet, dass**
- die mehreren Berührungssensoren (5) längs entlang jedem der mehreren Finger (4) angeordnet sind.

7. Greifvorrichtung (1, 1') nach einem der vorstehenden Ansprüche, **dadurch gekennzeichnet, dass**
- die mehreren Finger (4) zwei sind.

8. Greifvorrichtung (1, 1') nach einem der vorstehenden Ansprüche, **dadurch gekennzeichnet, dass**
- die Greifvorrichtung (1, 1') ferner Folgendes umfasst:
- einen Farbsensor (10), der dafür ausgelegt ist, eine Farbe einer Kappe (3), sofern vorhanden, die gegriffen wird, zu erfassen.

9. Analyseinstrument (100), umfassend
- eine Greifvorrichtung (1, 1') nach einem der vorstehenden Ansprüche.

## Revendications

1. Dispositif de préhension (1, 1') pour manipuler des récipients d'échantillons (2), dans lequel les récipients d'échantillons (2) sont fermés par des capuchons (3) d'un type de capuchon donné ou ne sont pas fermés par des capuchons,
dans lequel le dispositif de préhension (1, 1') comprend :
- un certain nombre de doigts (4) qui sont conçus pour provoquer collectivement la préhension d'un récipient d'échantillon (2),
**caractérisé en ce que** le dispositif de préhension (1, 1') comprend en outre :
- un dispositif de capteurs tactiles (5, 7, 8, 9) qui est disposé au niveau d'au moins un des doigts (4) et qui est conçu pour échantillonner un profil longitudinal (PL) du récipient d'échantillon (2) et du capuchon (3), le cas échéant, qui est saisi, dans lequel le dispositif de capteurs tactiles (5, 7, 8, 9) comprend un certain nombre de capteurs tactiles (5) qui sont disposés longitudinalement le long d'au moins un des doigts (4) pour échantillonner le profil longitudinal (PL), et
- un dispositif de commande (6) couplé au dispositif de capteurs tactiles (5, 7, 8, 9), dans lequel le dispositif de commande (6) est conçu pour déterminer si le récipient d'échantillon (2) est fermé par un capuchon (3) ou n'est pas fermé par un capuchon sur la base du profil longitudinal (PL) échantillonné.

2. Dispositif de préhension (1, 1') selon la revendication 1, **caractérisé en ce que**
- si le dispositif de commande (6) détermine que le récipient d'échantillon (2) est fermé par un capuchon (3) le dispositif de commande (6) est en outre conçu pour déterminer le type de capuchon, en particulier sur la base du profil longitudinal (PL) échantillonné.

3. Dispositif de préhension (1, 1') selon l'une quelconque des revendications précédentes, **caractérisé en ce que**
- le capuchon (3) comprend une partie de base (3b) à insérer dans le récipient d'échantillon (2),
- dans lequel si le dispositif de commande (6) détermine que le récipient d'échantillon (2) est fermé par un capuchon (3) le dispositif de commande (6) est en outre conçu pour déterminer dans quelle mesure la partie de base (3b) est insérée dans le récipient d'échantillon (2) sur la base du profil longitudinal (PL) échantillonné.

4. Dispositif de préhension (1, 1') selon l'une quelconque des revendications précédentes, **caractérisé en ce que**
- chaque capteur tactile (5) comprend
- une broche axialement mobile (7), et
- une cellule de mesure de déplacement (8) qui est conçue pour mesurer un déplacement axial de la broche axialement mobile (7).

5. Dispositif de préhension (1, 1') selon l'une quelconque des revendications précédentes, **caractérisé en ce que**
- les capteurs tactiles sont à ressort.

6. Dispositif de préhension (1, 1') selon l'une quelconque des revendications précédentes, **caractérisé en ce que**
- le certain nombre de capteurs tactiles (5) est disposé longitudinalement le long de chacun du certain nombre de doigts (4).

7. Dispositif de préhension (1, 1') selon l'une des revendications précédentes, **caractérisé en ce que**
- le nombre de doigts (4) est de deux.

8. Dispositif de préhension (1, 1') selon l'une des revendications précédentes, **caractérisé en ce que**
- le dispositif de préhension (1, 1') comprend en outre :
- un capteur de couleur (10) qui est conçu pour détecter une couleur d'un capuchon (3), le cas échéant, qui est saisi.

9. Instrument analytique (100), comprenant
- un dispositif de préhension (1, 1') selon l'une des revendications précédentes.
